# EUROPÄISCHE PATENTSCHRIFT

(11) **EP 3 961 108 B1**
(45) Veröffentlichungstag und Bekanntmachung des Hinweises auf die Patenterteilung: **15.10.2025**
(21) Anmeldenummer: 21190803.3
(22) Anmeldetag: 11.08.2021
(51) Int. Cl.: F24C 15/20, F24C 15/32, F16K 31/53, F16K 1/38

(54) **GARGERÄT ZUM ERHITZEN VON GARGUT**
COOKING DEVICE FOR HEATING FOOD
APPAREIL DE CUISSON PERMETTANT DE CHAUFFER UN ALIMENT

(30) Priorität: 24.08.2020 DE 102020210689
(43) Veröffentlichungstag der Anmeldung: 02.03.2022
(73) Patentinhaber: Werkhaus GmbH & Co. KG, 83064 Raubling (DE)
(72) Erfinder: Kurz, Philipp, 6342 Niederndorf (AT); Appel, Nikolaus, 6342 Niederndorf (AT)
(74) Vertreter: Rau, Schneck & Hübner Patentanwälte Rechtsanwälte PartGmbB

(56) Entgegenhaltungen:
- EP-A1- 3 431 848
- CN-A- 111 543 850
- DE-A1- 102008 012 681
- DE-B4- 102009 013 240
- DE-C1- 10 245 773
- DE-U1- 20 002 833
- US-A1- 2015 059 595

## Beschreibung

Die vorliegende Patentanmeldung nimmt die Priorität der deutschen Patentanmeldung DE 10 2020 210 689.4 in Anspruch.

Die Erfindung betrifft ein Gargerät zum Erhitzen von Gargut.

Die Erfindung betrifft auch ein Verfahren zum Betreiben eines Gargeräts zum Erhitzen von Gargut. Aus der DE 38 21 205 A1 ist ein Gargerät zum Erhitzen von Gargut bekannt. Das Gargerät umfasst eine Garkammer und eine Kühleinrichtung zum Reduzieren der Temperatur der Garkammer durch Ausbringen von Kühlwasser in der Garkammer. Nachteilig ist, dass die Kühleinrichtung nicht während des Garvorgangs aktiviert werden kann, ohne das in der Garkammer angeordnete Gargut zu durchfeuchten. Außerdem weist ein derartiges Gargerät einen hohen Verbrauch an Wasser und Energie auf.

Aus der DE 20 2018 006 378 U1 ist ein Garkammerventil für ein Gargerät bekannt, aufweisend einen elektrisch ansteuerbaren Antrieb zum Verlagern des Ventils zwischen einer Verschlussstellung und einer Offenstellung. Nachteilig ist, dass ein derartiges Garkammerventil störanfällig ist. Ein Garkammerventil ist auch bekannt aus der DE 10 2008 012 681 A1. Garkammerventile sind ferner bekannt aus der CN 111 543 850 A und der US 2015/0059595 A1. Ventile sind ferner bekannt aus der EP 3 431 848 A1 und der DE 10 2009 013 240 B4.

Es ist eine Aufgabe der Erfindung, ein verbessertes Gargerät zum Erhitzen von Gargut zu schaffen, welches insbesondere eine erhöhte Betriebssicherheit aufweist und eine besonders wasser- und energiesparende Steuerung des Garvorgangs gewährleistet.

Diese Aufgabe wird durch ein Gargerät zum Erhitzen von Gargut mit den Merkmalen des Anspruchs 1 gelöst. Im Allgemeinen betrifft die Erfindung ein Gargerät zum Erhitzen von Gargut mit einer Garkammer zum Aufnehmen des Garguts und einem Garkammerventil, welches zwischen einer Offenstellung und einer Verschlussstellung verlagerbar ist. Erfindungsgemäß weist das Gargerät mindestens einen mit dem Garkammerventil fluidleitend verbundenen Lüfter zum Fördern von Umgebungsluft durch das Garkammerventil in die Garkammer auf. Es wurde erkannt, dass ein Gargerät mit einer Garkammer und einem reversibel unterbrechbar fluidleitend daran angeschlossenen Garkammerventil mindestens einen Lüfter zum Fördern von Umgebungsluft durch das Garkammerventil in die Garkammer aufweisen kann, um eine Steuerung des Garvorgangs, insbesondere von Garparametern wie der Temperatur und/oder der Feuchtigkeit, in besonders effizienter Weise zu gewährleisten. Durch das Fördern der Umgebungsluft mittels des mindestens einen Lüfters in die Garkammer kann die Feuchtigkeit in der Garkammer rasch und wassersparend reduziert werden. Das Zuführen der Umgebungsluft in die Garkammer gewährleistet ferner eine rasche Einflussnahme auf die auf das Gargut einwirkende Wärmeleistung, insbesondere eine rasche Absenkung der Temperatur in der Garkammer. Hohe thermische und mechanische Beanspruchungen des Gargeräts, insbesondere der Garkammer, durch schlagartiges Verdampfen des in der Garkammer ausgebrachten Wassers, können vermieden werden. Dadurch, dass die Garkammer mit der Umgebung über das Garkammerventil reversibel unterbrechbar verbunden ist, kann zudem eine verbesserte Isolierung der Garkammer erzielt werden, wodurch ein Wärmeverlust der Garkammer über die Einströmöffnung zuverlässig verhindert werden. Dadurch, dass das Garkammerventil beim Überschreiten eines vorgegebenen Schwellenwerts einer Druckdifferenz zwischen der Garkammer und der Umgebung aus der Verschlussstellung in die mindestens eine Offenstellung wechselt, kann eine Beschädigung des Gargeräts, insbesondere der Garkammer, vermieden werden. Beispielsweise kann eine dauerhafte Verformung der Garkammer, insbesondere einer Garkammerwand, aufgrund eines Unterdrucks in der Garkammer gegenüber der Umgebung verhindert werden. Mittels des Garkammerventils kann beispielsweise ein Überdruck in der Garkammer gegenüber der Umgebung verhindert werden, welcher zu einer Beschädigung der Garkammer und/oder einer Garkammertür führen könnte und/oder eine Flüssigkeitssystem des Gargeräts beeinträchtigen könnte, insbesondere die Sperrwirkung eines Siphons aufheben könnte. Das Gargerät ist somit besonders sicher, robust, wasser- und energiesparend im Betrieb. Der Garvorgang ist besonders präzise steuerbar.

Die Begriffe Offenstellung und Verschlussstellung beziehen sich insbesondere auf die jeweilige Stellung des Verschlusskörpers des Garkammerventils, insbesondere relativ zu der Ventilkammer.

Das Verlagern des Garkammerventils aus der Verschlussstellung in die Offenstellung kann zumindest anteilig, insbesondere ausschließlich, aufgrund einer Kraft erfolgen, welche durch den auf das Garkammerventil wirkenden Druck, insbesondere die Druckdifferenz zwischen der Garkammer und der Umgebung, bewirkt wird. Hierdurch ist das Gargerät besonders sicher im Betrieb. Die Sicherheitsfunktion des Garkammerventils wird insbesondere unabhängig von einer Stromversorgung gewährleistet.

Der Schwellenwert der Druckdifferenz, bei dessen Erreichen das Garkammerventil aus der Verschlussstellung in die mindestens eine Offenstellung wechselt, wird auch als Druckdifferenz-Schwellenwert bezeichnet. Der Druckdifferenz-Schwellenwert liegt vorzugsweise in einem Bereich von 0,0001 bar bis 1 bar, insbesondere von 0,001 bar bis 0,1 bar, insbesondere von 0,01 bar bis 0,05 bar.

Unter dem Garkammerventil wird ein Bauteil verstanden, welches zum reversiblen Absperren eines Fluidstroms, insbesondere eines Luftstroms, insbesondere eines Stroms von Umgebungsluft, ausgebildet ist. Das Garkammerventil kann insbesondere als Kolbenventil, als Schieberventil, als Klappenventil oder als Hahnventil ausgebildet sein. Vorzugsweise ist das Garkammerventil bis mindestens 150°C, insbesondere bis mindestens 250°C, temperaturbeständig. Unter der reversibel unterbrechbar fluidleitenden Verbindung ist zu verstehen, dass das Garkammerventil die fluidleitende Verbindung in Abhängigkeit von dessen Schaltzustand herstellt oder unterbricht.

Unter der Umgebung wird der das Gargerät umgebende Raum, insbesondere ein Küchenraum, verstanden. Die fluidleitende Verbindung zwischen der Garkammer und der Umgebung ermöglicht den Fluidaustausch, insbesondere den Luftaustausch zwischen der Garkammer und der Umgebung.

Der Lüfter ist zum Fördern von Luft ausgebildet. Der Lüfter kann zum Anschluss an einen Strömungskanal ein Lüftergehäuse aufweisen oder Gehäusefrei ausgebildet sein. Der mindestens eine Lüfter kann beispielsweise ein Radiallüfter und/ oder ein Axiallüfter und/oder ein Querstromlüfter sein. Der mindestens eine Lüfter kann innerhalb und/oder außerhalb der Garkammer angeordnet sein. Vorzugsweise weist das Gargerät mindestens zwei, insbesondere mindestens drei, insbesondere mindestens vier, der Lüfter auf.

Gemäß einem Aspekt der Erfindung umfasst das Gargerät mindestens eine Filtereinheit. Die Filtereinheit kann einen Staubfilter, insbesondere einen HEPA-Filter, und/oder einen Fettfilter, insbesondere mit einem Metallgitter, und/oder einen Geruchsfilter, insbesondere einen Aktivkohlefilter und/oder einen Plasmafilter, aufweisen. Die mindestens eine Filtereinheit ist vorzugsweise derart an dem Gargerät angeordnet, dass diese von der über das Garkammerventil in die Garkammer einströmenden Umgebungsluft durchströmt wird. Die mindestens eine Filtereinheit kann stromaufwärts des Garkammerventils an dem Gargerät angebracht sein. Vorzugsweise ist die mindestens eine Filtereinheit austauschbar an dem Gargerät angebracht.

Gemäß einem weiteren Aspekt der Erfindung weist die Garkammer eine Entlüftungsöffnung auf. Die Entlüftungsöffnung wird nachfolgend auch als Kammer-Abströmöffnung bezeichnet. Vorzugsweise steht die Entlüftungsöffnung, insbesondere reversibel unterbrechbar, in fluidleitender Verbindung mit der Umgebung. Die fluidleitende Verbindung über die Entlüftungsöffnung mit der Umgebung gewährleistet, dass der Austausch der Luft in der Garkammer effizient erfolgen kann.

Gemäß einem weiteren Aspekt der Erfindung ist die mindestens eine Filtereinheit entlang des Strömungspfads der aus der Garkammer abgeleiteten Luft stromabwärts der Entlüftungsöffnung angeordnet. Die stromabwärts der Entlüftungsöffnung angeordnete Filtereinheit umfasst vorzugsweise den Geruchsfilter.

Gemäß einem weiteren Aspekt der Erfindung weist das Gargerät eine Aufbereitungseinheit auf, welche fluidleitend mit der Garkammer verbunden ist, insbesondere entlang eines Strömungspfades der aus der Garkammer abgeleiteten Luft zwischen der Entlüftungsöffnung und der Umgebung angeordnet ist. Die Aufbereitungseinheit kann die mindestens eine Filtereinheit umfassen. Vorzugsweise weist die Aufbereitungseinheit ein Entfeuchtungsmittel zum Reduzieren, insbesondere zum Ausscheiden, von Feuchtigkeit aus der Luft auf. Das Entfeuchtungsmittel kann ein Kühlelement, insbesondere einen Wärmetauscher und/oder ein Wasserbad und/oder einen Wasservorhang und/oder einen Feuchtigkeitsabsorber, umfassen.

Gemäß einem weiteren Aspekt der Erfindung umfasst das Gargerät einen Dampferzeuger zum Erhöhen der Feuchtigkeit in der Garkammer. Der Dampferzeuger kann zum Zuführen von Dampf und/oder Wasser in die Garkammer ausgebildet sein.

Das Gargerät kann eine Heizeinheit zum Erwärmen der Garkammer aufweisen. Die Heizeinheit kann in der Garkammer und/oder außerhalb der Garkammer angeordnet sein. Beispielsweise kann die Heizeinheit an einer Garkammerwand und/oder in einem Kanal zum Zuführen der Umgebungsluft durch die Belüftungsöffnung angeordnet sein.

Die Belüftungsöffnung und/oder die Entlüftungsöffnung sind separat von der Gargutöffnung ausgebildet.

Erfindungsgemäß ist das Garkammerventil reversibel verlagerbar zwischen der Verschlussstellung, in welcher ein Durchströmen des Garkammerventils verhindert ist und der mindestens einen Offenstellung, in welcher das Garkammerventil durchströmbar ist. In der mindestens einen Offenstellung beträgt der geringste Strömungsquerschnitt des Garkammerventils vorzugsweise mindestens 1 cm², insbesondere mindestens 2 cm², insbesondere mindestens 5 cm², insbesondere mindestens 10 cm², insbesondere mindestens 20 cm², insbesondere maximal 100 cm². Hierdurch ist der Strömungswiderstand besonders gering.

Gemäß einem weiteren Aspekt der Erfindung weist die Garkammer mindestens zwei, insbesondere mindestens drei, insbesondere mindestens fünf, insbesondere mindestens zehn, der Belüftungsöffnungen auf, welche zum Zuführen von Umgebungsluft in die Garkammer über das Garkammerventil fluidleitend mit der Umgebung verbunden sind. Hierdurch wird eine besonders effiziente Spülung feuchter Luft aus der Garkammer erzielt. Das Garkammerventil umfasst vorzugsweise ein Befestigungsmittel zum, insbesondere fluiddichten, Befestigen des Garkammerventils an der Garkammer. Das Befestigungsmittel kann ein Anlageelement mit einer Anlagefläche zum, insbesondere fluiddichten, Kontaktieren einer Garkammerwand der Garkammer aufweisen. Das Anlageelement kann als Flansch, insbesondere als Anlagekragen und/oder als Anlagerippe, ausgebildet sein. Das Anlagemittel umschließt vorzugsweise einen von dem Garkammerventil ausgebildeten Strömungskanal vollständig. Die Anlagefläche ist vorzugsweise schräg, insbesondere senkrecht, zur Strömungsrichtung und/oder zu einer Stellbewegungsrichtung eines Verschlusskörpers des Garkammerventils orientiert. Die Stellbewegungsrichtung entspricht vorzugsweise einer Öffnungsrichtung, in welcher der Verschlusskörper aus der Verschlussstellung in die mindestens eine Offenstellung verlagerbar ist.

Erfindungsgemäß weist das Gargerät einen Ventilmotor zum Verlagern des Garkammerventils zwischen der Verschlussstellung, in welcher ein Durchströmen des Garkammerventils verhindert ist, und der mindestens einen Offenstellung, in welcher das Garkammerventil durchströmbar ist, auf. Vorzugsweise umfasst der Ventilmotor einen Elektromotor. Erfindungsgemäß umfasst der Ventilmotor ein Ventilgetriebe zum Verlagern des Garkammerventils. Erfindungsgemäß ist der Ventilmotor zum Verlagern eines Verschlusskörpers des Garkammerventils relativ zu einer Ventilkammer des Garkammerventils ausgebildet. Das Ventilgetriebe ist selbsthemmend ausgebildet. Gemäß einer nicht beanspruchten Ausführungsform kann das Ventilgetriebe nichtselbsthemmend ausgebildet sein. Vorzugsweise umfasst das Ventilgetriebe ein Ritzel und/oder eine Zahnstange und/oder einen Zahnhebel. Das Ventilgetriebe kann einen schwenkbar gelagerten Antriebsarm zum, insbesondere kontaktierenden, Antreiben des Verschlusskörpers aufweisen. Der Antriebsarm kann ein Bestandteil des Zahnhebels sein.

Der Ventilmotor kann auch als Ventilantrieb und/oder als Antriebseinrichtung bezeichnet werden. Der Ventilantrieb kann einen Kraftwandler, insbesondere das Ventilgetriebe, insbesondere zur Kraftwandlung, aufweisen.

Der Ventilantrieb kann einen Krafterzeuger, insbesondere den Elektromotor und/oder einen fluidischen Motor, insbesondere einen Pneumatikzylinder, insbesondere zum Bereitstellen einer Antriebskraft, aufweisen. Der Ventilantrieb stellt vorzugsweise eine Stellkraft bereit. Vorzugsweise wird die Antriebskraft mittels des Krafterzeugers erzeugt und mittels des Kraftwandlers in die Stellkraft gewandelt.

Gemäß einem Aspekt der Erfindung ist der Ventilmotor an der Ventilkammer angebracht. Insbesondere kann der Ventilmotor an einer einstückig, insbesondere stoffschlüssig, mit der Ventilkammer ausgebildeten Tragstruktur angebracht sein.

Gemäß einem weiteren Aspekt der Erfindung ist zwischen dem Ventilmotor und einem Verschlusskörper des Garkammerventils eine Kopplung derart ausgebildet, dass der Verschlusskörper entlang einer Wirkrichtung des Ventilmotors verlagerbar an dem Ventilmotor angebunden ist. Unter der verlagerbaren Anbindung wird verstanden, dass der Verschlusskörper, insbesondere entlang der Wirkrichtung des Ventilmotors, lösbar mit diesem verbunden ist. Hierdurch wird vorteilhaft erreicht, dass der Verschlusskörper, insbesondere aus der Verschlussstellung in die Offenstellung, verlagerbar ist, wobei der Ventilmotor keine Verlagerung erfährt. Die Kopplung kann hierzu ein elastisches, insbesondere ein gummielastisches, Verbindungsmittel und/oder ein Rotationsspiel und/oder ein Linearspiel und/oder eine einseitig rastende Verbindung aufweisen. Der Verschlusskörper kann entlang der Stellbewegungsrichtung relativ zu dem Ventilmotor, insbesondere einem Ventilgetriebe, verlagerbar an diesen gekoppelt sein. Vorzugsweise ist die Kopplung derart ausgebildet, dass senkrecht zu der Stellbewegungsrichtung und/oder der Wirkrichtung des Ventilmotors eine Relativbewegung zwischen dem Verschlusskörper und dem Ventilmotor freigegeben ist. Vorteilhaft wird hierdurch erreicht, dass der linear verschiebbar gelagerte Verschlusskörper mittels eines schwenkbar gelagerten Antriebarms, insbesondere leichtgängig, antreibbar ist. Die Kopplung ist vorzugsweise derart ausgebildet, dass zwischen dem Ventilmotor und dem Verschlusskörper, insbesondere von dem Ventilmotor auf den Verschlusskörper, lediglich Kräfte parallel zu der Stellbewegungsrichtung übertragbar sind. Um eine entsprechende Relativbewegung zwischen diesen Komponenten zu ermöglichen kann die Kopplung eine Nut oder ein Langloch aufweisen. Insbesondere kann in mindestens eine, insbesondere in genau eine Richtung, senkrecht zu der Stellbewegungsrichtung eine entsprechende Relativbewegung zwischen dem Verschlusskörper und dem Ventilmotor freigegeben sein. Vorzugsweise ist die Kopplung dazu ausgebildet, eine Drehbewegung, insbesondere eine Schwenkbewegung, insbesondere des Antriebsarms, in eine Linearbewegung, insbesondere des Verschlusskörpers, zu wandeln. Vorteilhaft wird hierdurch erreicht, dass der Ventilmotor das Verlagern des Verschlusskörpers, insbesondere aus der Verschlussstellung in die mindestens eine Offenstellung, nicht hemmt.

Gemäß einem Aspekt der Erfindung kann der Verschlusskörper in der mindestens einen Offenstellung und/oder in der Verschlussstellung vollständig außer Eingriff, insbesondere außer Kontakt, mit dem Ventilmotor stehen. Hierdurch wird vorteilhaft erreicht, dass der Verschlusskörper besonders zuverlässig zwischen der Verschlussstellung und der Offenstellung verlagerbar ist. Die kontaktfreie Anordnung stellt sicher, dass keinerlei Kräfte von dem Ventilmotor auf den Verschlusskörper übertragen werden, welche zu einer Hemmung der Verlagerungsbewegung des Verschlusskörpers führen könnten.

Gemäß einem weiteren Aspekt der Erfindung ist ein Strömungsquerschnitt des Garkammerventils stufenlos einstellbar. Vorzugsweise ist der Ventilmotor zum stufenlosen Einstellen des Strömungsquerschnitts ausgebildet. Hierzu kann der Ventilmotor zum stufenlosen Verlagern des Verschlusskörpers relativ zu der Ventilkammer ausgebildet sein.

Gemäß einem weiteren Aspekt der Erfindung weist der mindestens eine Lüfter ein Lüfterrad auf, welches die Belüftungsöffnung entlang einer Einströmöffnung der Umgebungsluft in die Garkammer überlappt. Der mindestens eine Lüfter ist vorzugsweise ein, insbesondere innerhalb der Garkammer angeordneter, Garkammerlüfter oder Umluftlüfter. Vorzugsweise ist die Belüftungsöffnung in einem Bereich der Garkammer angeordnet, in dem der Lüfter einen gegenüber dem Umgebungsdruck niedrigeren Unterdruck erzeugt. Hierdurch wird der Zustrom der Umgebungsluft in die Garkammer zuverlässig gewährleistet. Zudem kann die einströmende Umgebungsluft mittels des Lüfters besonders gleichmäßig in der Garkammer verteilt werden. Vorzugsweise überlappt das Lüfterrad die Einströmöffnung in einer Vorderansicht. Die Einströmöffnung ist vorzugsweise derart angeordnet, dass die Umgebungsluft über den von dem Lüfterrad überstrichenen Raum in die Garkammer einströmt.

Der mindestens eine Lüfter kann zum Absaugen von Luft aus der Garkammer oder zum Einblasen der Umgebungsluft in die Garkammer ausgebildet. Der Lüfter ist vorzugsweise zum Absaugen, also zum Erzeugen eines Unterdrucks in der Garkammer und/oder an der Belüftungsöffnung ausgebildet, welcher das Zuströmen der Umgebungsluft über das Garkammerventil und die Einströmöffnung bewirkt.

Gemäß einem weiteren Aspekt der Erfindung weist das Gargerät eine mit dem mindestens einen Lüfter und/oder dem Ventilmotor in Signalverbindung stehende Steuereinheit zum Steuern eines Stroms der Umgebungsluft über das Garkammerventil in die Garkammer auf. Die Steuereinheit steht vorzugsweise in Signalverbindung mit der Heizeinheit und/oder dem Dampferzeuger. Die Steuereinheit ist vorzugsweise dazu ausgebildet, einen Temperatur-Sollwert und/oder einen Feuchtigkeits-Sollwert der Luft in der Garkammer, insbesondere mittels der Heizeinheit und/oder des Dampferzeugers und/oder des Garkammerventils und/oder des mindestens einen Lüfters, zu steuern, insbesondere zu regeln. Unter dem Strom der Umgebungsluft wird der Volumenstrom verstanden.

Zum Regeln des Stroms der Umgebungsluft kann die Steuereinheit dazu ausgebildet sein, die dem mindestens einen Lüfter zugeführte Leistung und/oder eine Stellung des Garkammerventils, insbesondere den Strömungsquerschnitt des Garkammerventils, zu steuern. Für den sich einstellenden Strom der Umgebungsluft sind die hierdurch erzielte Druckdifferenz zwischen der Umgebung und der Garkammer und der Strömungswiderstand des Garkammerventils maßgeblich.

Erfindungsgemäß ist das Garkammerventil zum, insbesondere selbsttätigen, Verlagern aus der Verschlussstellung in die mindestens eine Offenstellung beim Erreichen des Druckdifferenz-Schwellenwerts, insbesondere zwischen zwei Ventilöffnungen des Garkammerventils, ausgebildet. Das Garkammerventil ist vorzugsweise dazu ausgebildet, aufgrund eines Drucks in der Garkammer, der geringer ist als ein Druck in der Umgebung, aus der Verschlussstellung in die mindestens eine Offenstellung zu Wechseln. Unter dem selbsttätigen Verlagern wird verstanden, dass das Verlagern des Garkammerventils aufgrund der Druckdifferenz zwischen den zwei Ventilöffnungen bewirkt wird. Eine Betätigung des Garkammerventils mittels des Ventilmotors ist dabei nicht erforderlich. Vorzugsweise gibt das Garkammerventil bei Erreichen des Druckdifferenz-Schwellenwerts eine Durchströmung in die Garkammer und/oder aus der Garkammer heraus oder lediglich in eine einzige dieser Strömungsrichtungen frei. Beispielsweise ist das Garkammerventil als Rückschlagventil ausgebildet. Vorteilhaft wird hierdurch erreicht, dass eine Druckdifferenz zwischen der Garkammer und der Umgebung zuverlässig verhindert wird, welche zu einer Beschädigung des Gargeräts, insbesondere der Garkammer, führen könnte.

Gemäß einem weiteren Aspekt der Erfindung umfasst das Gargerät mindestens einen Drucksensor zum Bestimmen eines Drucks innerhalb der Garkammer und/oder einer Druckdifferenz zwischen der Garkammer und der Umgebung. Der mindestens eine Drucksensor steht vorzugsweise in Signalverbindung mit der Steuereinheit. Die Steuereinheit kann dazu ausgebildet sein, das Garkammerventil, insbesondere mittels des Ventilmotors, aus der Verschlussstellung in die mindestens eine Offenstellung zu verlagern, wenn die Druckdifferenz zwischen der Garkammer und der Umgebung einen Druckdifferenz-Schwellenwert erreicht und/oder überschreitet. Eine Beschädigung des Gargeräts aufgrund eines Unterdrucks in der Garkammer, insbesondere beim Abkühlen der Garkammer, kann somit zuverlässig verhindert werden.

Erfindungsgemäß weist das Garkammerventil eine Ventilkammer und einen Verschlusskörper auf, wobei der Verschlusskörper relativ zu der Ventilkammer verlagerbar ist zwischen der Verschlussstellung, in welcher ein Durchströmen der Ventilkammer verhindert ist, und der mindestens einen Offenstellung, in welcher die Ventilkammer durchströmbar ist. Der Verschlusskörper ist vorzugsweise trichterförmig, insbesondere mit einer entlang der Strömungsrichtung in die Garkammer aufweitenden Form, ausgebildet. Beispielsweise kann der Verschlusskörper zumindest abschnittsweise kegelförmig und/oder kugelförmig und/oder in Form eines Blütenmischers ausgebildet sein. Der Verschlusskörper kann schwenkbar und/oder linear verschiebbar relativ zu der Ventilkammer ausgebildet, insbesondere an der Ventilkammer angebracht, sein. Eine Öffnungsrichtung, in welcher der Verschlusskörper aus der Verschlussstellung in die mindestens eine Offenstellung verlagerbar ist, ist vorzugsweise entlang des Strömungspfads in Richtung der Garkammer orientiert. Der Ventilmotor wirkt vorzugsweise in die Öffnungsrichtung auf den Verschlusskörper. Der Verschlusskörper kann entlang der Öffnungsrichtung relativ zu dem Ventilmotor verlagerbar sein.

Insbesondere kann das Garkammerventil als Tulpenventil ausgebildet sein. Das Garkammerventil kann auch mehrere, entlang der Strömungsrichtung hintereinander geschaltete Verschlusskörper aufweisen. Das Gargerät kann auch mehrere entlang der Strömungsrichtung hintereinander geschaltete Garkammerventile aufweisen. Hierdurch kann eine nochmals bessere thermische Isolierung der Garkammer gegenüber der Umgebung erzielt werden.

Gemäß einem Aspekt der Erfindung ist der Verschlusskörper mittels mindestens einer Vorspannfeder in die Verschlussstellung vorgespannt. Die Vorspannfeder kann als Spiralfeder, insbesondere als Zugfeder und/oder als Druckfeder, und/oder als Torsionsfeder und/oder als Blattfeder ausgebildet sein. Die Vorspannfeder gewährleistet die zuverlässige Anordnung des Verschlusskörpers in der Verschlussstellung. Vorzugsweise ist die Vorspannfeder derart ausgebildet, dass sich das Garkammerventil bei Erreichen des Druckdifferenz-Schwellenwerts, insbesondere einer Druckdifferenz an zwei gegenüberliegenden Seiten des Verschlusskörpers, selbsttätig aus der Verschlussstellung in die mindestens eine Offenstellung verlagert.

Die mindestens eine Vorspannfeder weist vorzugsweise eine Gewindesteigung von mindestens 3 mm, insbesondere mindestens 5 mm, insbesondere mindestens 7 mm, insbesondere mindestens 10 mm auf, insbesondere wenn diese als Druckfeder ausgebildet ist. Die Gewindesteigung wird vorzugsweise in einem lastfreien Zustand und/oder in der Verschlussstellung bestimmt. Hierdurch kann die Wirkung der Vorspannfeder besonders zuverlässig, insbesondere unabhängig von darauf abgeschiedenen Fetten, zuverlässig gewährleistet werden.

Die Ventilkammer weist vorzugsweise mindestens zwei Ventilöffnungen auf. Ein von der Ventilkammer ausgebildeter Strömungskanal erstreckt sich vorzugsweise zwischen den mindestens zwei Ventilöffnungen. Der Strömungskanal kann tailliert, insbesondere in Form einer Sanduhr, ausgebildet sein. Der Abschnitt des Strömungskanals, in welchem die Querschnittsverjüngung vorliegt, wird auch als Halsabschnitt bezeichnet. Vorzugsweise ist ein Ventilsitz, insbesondere eine Dichtfläche, an welcher der Verschlusskörper in der Verschlussstellung die Ventilkammer kontaktiert, im Bereich der Verjüngung des Strömungsquerschnitts, insbesondere im Bereich des Halsabschnitts, angeordnet.

Gemäß einem weiteren Aspekt der Erfindung ist der Verschlusskörper in der Verschlussstellung und/oder in der mindestens einen Offenstellung konzentrisch zu der Ventilkammer, insbesondere konzentrisch, insbesondere koaxial, zu einem von der Ventilkammer ausgebildeten Strömungskanal, angeordnet.

Gemäß einem weiteren Aspekt der Erfindung liegt ein Öffnungswinkel zwischen der Öffnungsrichtung des Verschlusskörpers beim Verlagern aus der Verschlussstellung und einer Strömungsrichtung entlang einer Dichtfläche, in welcher der Verschlusskörper in der Verschlussstellung die Ventilkammer kontaktiert, in einem Bereich von 20° bis 80°. Der Öffnungswinkel liegt vorzugsweise in einem Bereich von 10° bis 80°, insbesondere von 15° bis 70°, insbesondere von 20° bis 60°, insbesondere von 25° bis 50°, insbesondere von 30° bis 45°. Die Umlenkung der Strömung ist somit besonders gering. Der Strömungswiderstand und/oder Geräuschemissionen des Garkammerventils sind reduziert. Unter der Dichtfläche wird eine Fläche verstanden, in welcher der in der Verschlussstellung angeordnete Verschlusskörper die Ventilkammer kontaktiert. Die Strömungsrichtung entlang der Dichtfläche ist die Richtung der an der Dichtfläche anliegenden Strömung beim Einströmen der Umgebungsluft in die Garkammer.

Gemäß einem Aspekt der Erfindung besteht zwischen dem in der Verschlussstellung angeordneten Verschlusskörper und der Ventilkammer ein Linienkontakt und/oder ein Flächenkontakt. Ein Linienkontakt kann vorliegen, wenn eine Kontaktfläche des Verschlusskörpers eine Krümmung aufweist, welche sich unterscheidet von einer Krümmung einer GegenKontaktfläche der Ventilkammer, insbesondere in einem Längsschnitt durch das Garkammerventil. Ein Linienkontakt kann beispielsweise mittels eines Dichtungsrings, insbesondere eines O-Rings, realisiert werden, welcher an dem Verschlusskörper und/oder an der Ventilkammer angebracht sein kann. Bei einem Linienkontakt ist der Verschlusskörper besonders zuverlässig, insbesondere auch unter Einfluss von Verschmutzungen, aus der Verschlussstellung in die mindestens eine Offenstellung verlagerbar. Der Flächenkontakt gewährleistet eine besonders effiziente, insbesondere geräuscharme Strömungsführung. Zum Ausbilden des Flächenkontakts können die Kontaktfläche des Verschlusskörpers und die GegenKontaktfläche der Ventilkammer aneinander angepasst sein, insbesondere einander gleichen. Der Flächenkontakt erstreckt sich entlang der Richtung der Strömung über die Kontaktfläche, bei geöffnetem Garkammerventil, vorzugsweise über eine Länge in einem Bereich von 1 mm bis 20 mm, insbesondere von 2 mm bis 10 mm, insbesondere von 3 mm bis 5 mm.

Das Garkammerventil kann mit oder ohne einem gummi-elastischen Dichtelement ausgebildet sein. Insbesondere bei dem vorstehend beschriebenen Flächenkontakt kann auf ein gummi-elastisches Material zum fluiddichten Kontakt zwischen dem Verschlusskörper und der Ventilkammer verzichtet werden. Der Verschlusskörper und/oder die Ventilkammer können ein formstarres Material, insbesondere einen formstarren Kunststoff, insbesondere ein Duromer, aufweisen, insbesondere daraus bestehen. Das Garkammerventil ist somit besonders langlebig und robust im Betrieb.

Gemäß einem weiteren Aspekt der Erfindung liegt ein Außendurchmesser des reversibel verschließbaren Strömungsquerschnitts des Garkammerventils in einem Bereich von 20 mm bis 100 mm, insbesondere von 25 mm bis 80 mm, insbesondere von 30 mm bis 70 mm, insbesondere von 40 mm bis 60 mm. Vorteilhaft wird hierdurch erreicht, dass die aufgrund der Druckdifferenz auf den Verschlusskörper wirkende Druckkraft besonders groß ist. Ein Verlagern des Verschlusskörpers aufgrund der Druckdifferenz kann somit besonders zuverlässig gewährleistet werden.

Vorzugsweise ist der Verschlusskörper zwischen einem ersten und einem zweiten Endanschlag verlagerbar. Der erste Endanschlag wird vorzugsweise dadurch gebildet, dass der Verschlusskörper in der Verschlussstellung an der Ventilkammer anliegt. Der zweite Endanschlag kann die Verlagerbarkeit des Verschlusskörpers in die Öffnungsrichtung begrenzen. Der zweite Endanschlag ist vorzugsweise durch eine mit der Ventilkammer verbundene Linearführung und einen mit dem Verschlusskörper verbundenen Vorsprung, insbesondere einer mit dem Verschlusskörper verbundenen Scheibe, ausgebildet. Die mindestens eine Vorspannfeder wirkt vorzugsweise zwischen der Linearführung und dem Vorsprung. Insbesondere kann sich die mindestens eine Vorspannfeder auf dem Vorsprung, insbesondere der Scheibe, und/oder der Linearführung abstützen.

Gemäß einem weiteren Aspekt der Erfindung weist das Garkammerventil eine Linearführung zum Führen des Verschlusskörpers zwischen der Verschlussstellung und der mindestens einen Offenstellung auf. Die Linearführung kann ein mit der Ventilkammer verbundenes Führungselement und/oder ein mit dem Verschlusskörper verbundenes Gegen-Führungselement aufweisen. Das Führungselement und/oder das Gegen-Führungselement können als Führungsschaft und/oder als Führungshülse ausgebildet sein. Vorzugsweise ist das Führungselement einteilig, insbesondere stoffschlüssig, mit der Ventilkammer ausgebildet. Das Gegen-Führungselement kann einteilig, insbesondere stoffschlüssig, mit dem Verschlusskörper ausgebildet sein. Vorzugsweise ist das Führungselement über mindestens eine, insbesondere mindestens zwei, insbesondere mindestens drei, Rippen in der Garkammer angebracht. Die mindestens eine Rippe kann als Strömungsleitelement ausgebildet sein. Das Führungselement und/oder das Gegen-Führungselement sind vorzugsweise konzentrisch zu einer Mittellängsachse des Garkammerventils, insbesondere der Ventilkammer, ausgebildet.

Die Ventilkammer und/oder der Verschlusskörper können ein Metall und/oder einen Kunststoff aufweisen. Vorzugsweise sind die Ventilkammer und/oder der Verschlusskörper aus einem, insbesondere bis mindestens 150°C, insbesondere mindestens 250°C, temperaturbeständigen Material hergestellt. Vorzugsweise bestehen die Ventilkammer und/oder der Verschlusskörper aus Polyphenylensulfid. Die Ventilkammer und/oder der Verschlusskörper sind vorzugsweise in einem Gussverfahren, insbesondere in einem Spritzgussverfahren, hergestellt.

Erfindungsgemäß ist das Gargerät ein Backofen und/oder ein Dampfgarofen. Das als Dampfgarofen ausgebildete Gargerät umfasst vorzugsweise einen, insbesondere mit der Garkammer in fluidleitender Verbindung stehenden, Frischwasseranschluss und/oder Abwasseranschluss.

Eine weitere Aufgabe der Erfindung besteht darin, ein verbessertes Verfahren zum Betreiben eines Gargeräts zum Erhitzen von Gargut zu schaffen, welches insbesondere zu einem reduzierten Wasser- und Energieverbrauch führt und eine besonders präzise Steuerung des Garvorgangs ermöglicht. Diese Aufgabe wird durch ein Verfahren zum Betreiben eines Gargeräts zum Erhitzen von Gargut nach einem der vorstehenden Aspekt gelöst, mit den Schritten: Bereitstellen des Gargeräts, Fördern von Umgebungsluft mittels des Lüfters durch das Garkammerventil und die Belüftungsöffnung in die Garkammer, und Verlagern des Garkammerventils aus der Verschlussstellung in die mindestens eine Offenstellung beim Überschreiten eines vorgegebenen Schwellenwerts einer Druckdifferenz zwischen der Garkammer und der Umgebung. Die Vorteile des Verfahrens entsprechen den vorstehend im Zusammenhang mit dem Gargerät, dem Garkammerventil und der Verwendung beschriebenen Vorteilen. Vorzugsweise ist das Verfahren mit mindestens einem der Merkmale weitergebildet, die vorstehend im Zusammenhang mit dem Gargerät, dem Garkammerventil und/oder der Verwendung beschrieben sind.

Vorzugsweise wird das Garkammerventil aus der Verschlussstellung in die mindestens eine Offenstellung verlagert. Hierzu kann der Verschlusskörper, insbesondere entlang der Linearführung, relativ zu der Garkammer verlagert werden.

Vorzugsweise wird Luft aus der Garkammer in die Umgebung abgeleitet, insbesondere abgesaugt. Die in die Garkammer einströmende Luft wird vorzugsweise vor dem Einströmen in die Garkammer, insbesondere mittels der mindestens einen Filtereinheit, gefiltert. Die aus der Garkammer ausströmende Luft wird vorzugsweise vor dem Ausströmen in die Umgebung, insbesondere mittels der mindestens einen Filtereinheit, insbesondere von Fetten und/oder Gerüchen, befreit. Vorzugsweise wird die aus der Garkammer ausströmende Luft, insbesondere mittels der Aufbereitungseinheit, insbesondere vor dem Ausströmen in die Umgebung, entfeuchtet.

Gemäß einem weiteren Aspekt der Erfindung wird das Garkammerventil zum Steuern des Stroms der Umgebungsluft über das Garkammerventil in die Garkammer, insbesondere stufenlos, zwischen der Verschlussstellung und der mindestens einen Offenstellung eingestellt. Das Garkammerventil kann wiederholt zwischen der Verschlussstellung und einer einzigen Offenstellung verlagert, um den Strom der Umgebungsluft in die Garkammer entsprechend eines Verhältnisses zwischen der jeweiligen Dauer der Anordnung in der Verschlussstellung und in der Offenstellung einzustellen.

Gemäß einem weiteren Aspekt der Erfindung werden die Temperatur und/oder die Feuchtigkeit der Luft in der Garkammer, insbesondere mittels der Steuereinheit, durch Steuern des Garkammerventils, insbesondere zwischen der Verschlussstellung und der mindestens einen Offenstellung, und/oder des mindestens einen Lüfters und/oder der Heizeinheit und/oder des Dampferzeugers, insbesondere auf einen Temperatur-Sollwert und/oder einen Feuchtigkeits-Sollwert, eingestellt.

Gemäß einem weiteren Aspekt der Erfindung erfolgt ein, insbesondere gesteuertes und/oder geregeltes, Reduzieren der Luftfeuchtigkeit und/oder der Temperatur der Luft in der Garkammer durch das Zuführen der Umgebungsluft in die Garkammer, insbesondere auf einen vorgegebenen Feuchtigkeits-Sollwert und/oder einen vorgegebenen Temperatur-Sollwert. Vorteilhaft wird hierdurch erreicht, dass auf die Temperatur und/oder die Feuchtigkeit in der Garkammer besonders energieeffizient und wassersparend Einfluss genommen werden kann.

Weitere Merkmale, Einzelheiten und Vorteile der Erfindung ergeben sich aus der nachfolgenden Beschreibung eines Ausführungsbeispiels anhand der Figuren. Es zeigen:
- Fig. 1: eine perspektivische Darstellung eines Gargeräts zum Erhitzen von Gargut mit einem Garkammerventil, welches mit einer Belüftungsöffnung einer Garkammer des Gargeräts fluidleitend verbunden ist,
- Fig. 2: eine Schnittdarstellung des Gargeräts entlang der Schnittlinie II-II in Fig. 1, insbesondere durch das Garkammerventil und die Garkammer, mit teilweise schematisch dargestellten Bestandteilen,
- Fig. 3: eine perspektivische Darstellung des Garkammerventils in Fig. 1, wobei das Garkammerventil einen Ventilmotor zum Verlagern eines Verschlusskörpers relativ zu einer Ventilkammer zwischen einer Verschlussstellung und einer Offenstellung aufweist,
- Fig. 4: eine Rückansicht des Garkammerventils in Fig. 1 mit dem konzentrisch in einer Ventilkammer angeordneten und relativ zu der Ventilkammer linear verschiebbar gelagerten Verschlusskörper,
- Fig. 5: eine Schnittdarstellung des Garkammerventils entlang der Schnittlinie V-V in Fig. 4, insbesondere durch eine Linearführung zum Führen des Verschlusskörpers zwischen der Verschlussstellung und der Offenstellung, wobei das Garkammerventil in der Verschlussstellung angeordnet ist, und
- Fig. 6: eine Schnittdarstellung des Garkammerventils entlang der Schnittlinie VI-VI in Fig. 4, insbesondere durch ein Ventilgetriebe und eine Kopplung zwischen dem Ventilmotor und dem Verschlusskörper.

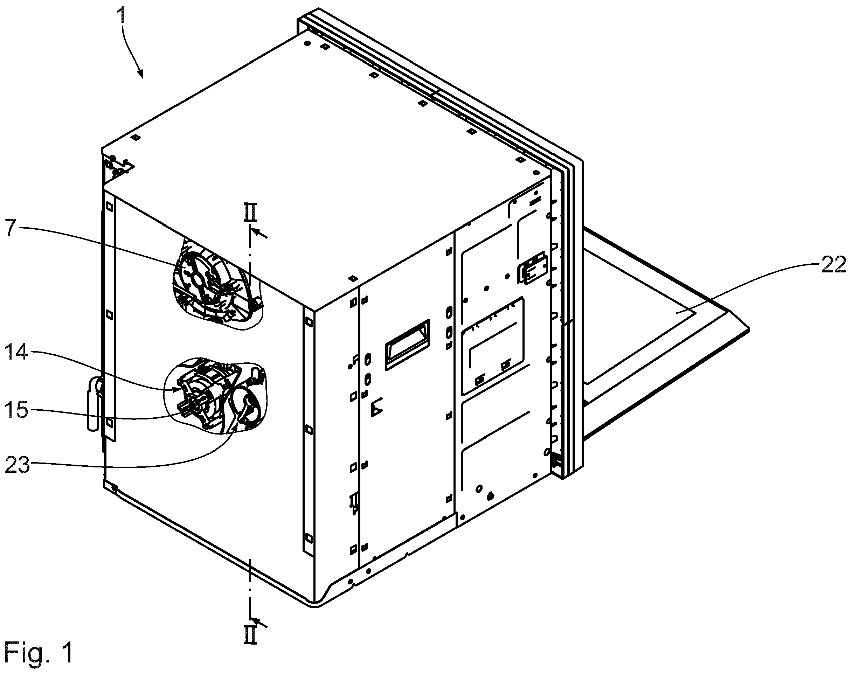

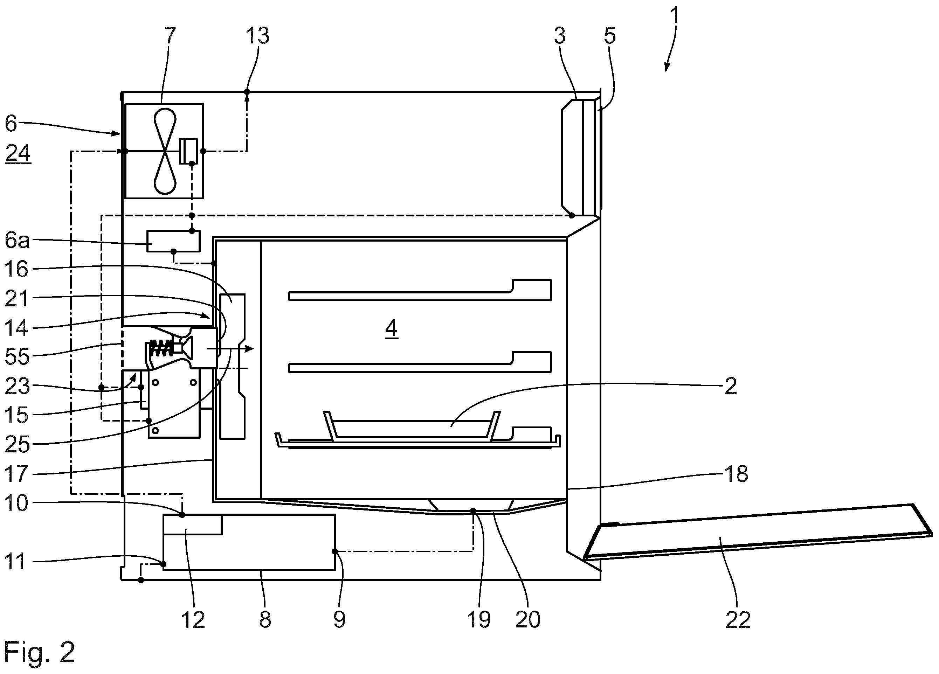

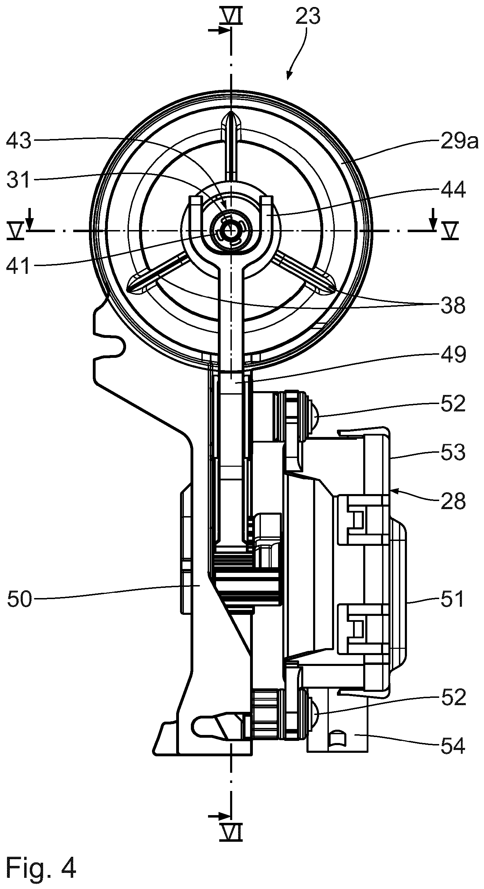

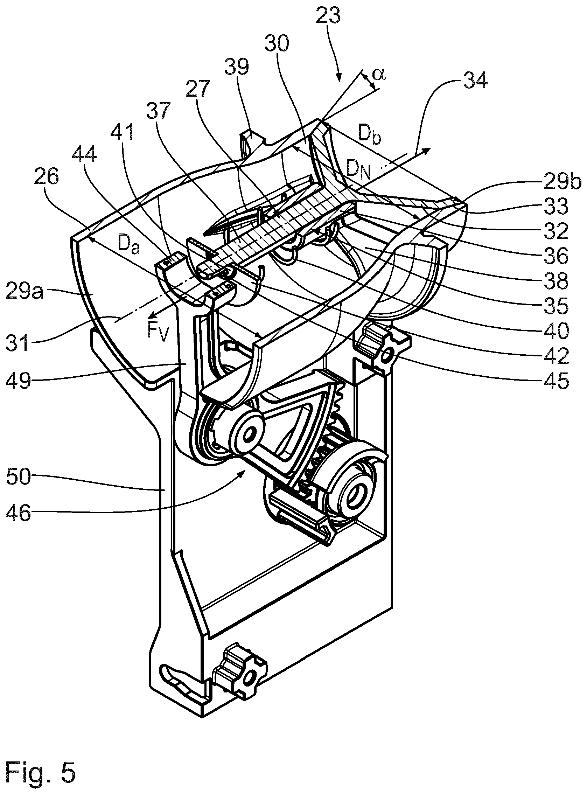

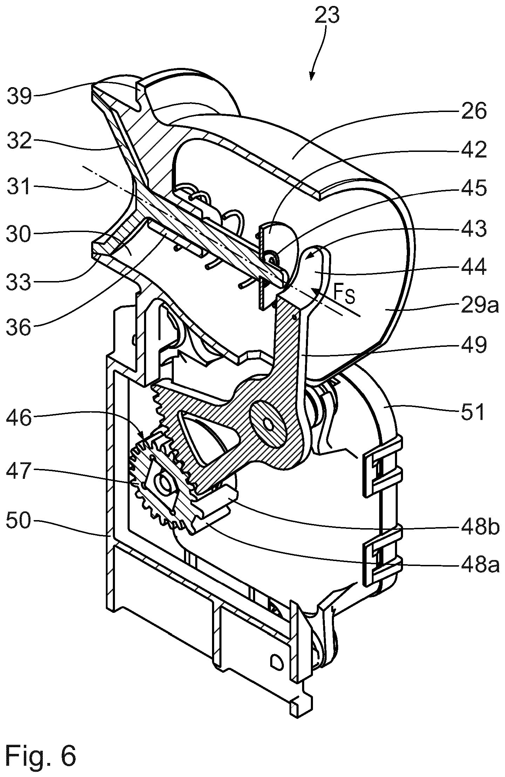

Anhand der Fig. 1 bis Fig. 6 ist ein Gargerät 1 zum Erhitzen von Gargut 2 beschrieben. Das Gargerät 1 ist als Dampfgarofen ausgebildet. Das Gargerät 1 weist eine Steuereinheit 3 zum Steuern des Garvorgangs und ein Garkammer 4 zum Aufnehmen des zu erhitzenden Garguts 2 auf. Die Steuereinheit 3 umfasst eine Benutzerschnittstelle 5, insbesondere einen berührungsempfindlichen Bildschirm, zur Anzeige von Informationen und zur Eingabe von Benutzerbefehlen.

Die Garkammer 4 ist über eine nicht dargestellte Heizeinheit beheizbar. Eine Fluidableiteinheit 6 des Gargeräts 1 ist zum Ableiten von Fluid, insbesondere von Luft und Wasser, insbesondere Wasserdampf, aus der Garkammer 4 ausgebildet. Das Gargerät 1 weist einen Dampferzeuger 6a zum Zuführen von Wasser, insbesondere von flüssigem oder dampfförmigem Wasser, in die Garkammer 4 auf. Der Dampferzeuger 6a umfasst mehrere Sprühdüsen zum Ausbringen des Wassers in der Garkammer 4. Die Heizeinheit, die Fluidableiteinheit 6 und der Dampferzeuger 6a stehen mit der Steuereinheit 3 in Signalverbindung.

Die Fluidableiteinheit 6 umfasst einen Abzugslüfter 7 zum Abzug von Fluid, insbesondere feuchter Luft, aus der Garkammer 4. Ferner umfasst die Fluidableiteinheit 6 eine Aufbereitungseinheit 8 zum Kühlen des von der Garkammer 4 abgesaugten Fluids. Insbesondere ist die Aufbereitungseinheit 8 dazu ausgebildet, die in dem abgesaugten Fluid enthaltene Feuchtigkeit zu kondensieren. Der Abzugslüfter 7 steht mit der Garkammer 4 über die Aufbereitungseinheit 8 in fluidleitender Verbindung. Hierzu weist die Aufbereitungseinheit 8 eine Abluft-Zuströmöffnung 9 und eine Abluft-Abströmöffnung 10 auf. Eine Drainageöffnung 11 der Aufbereitungseinheit 8 ist fluidleitend mit einem nicht dargestellten Abfluss verbunden. Ein Filtermittel 12 der Aufbereitungseinheit 8 ist zwischen der Abluft-Zuströmöffnung 9 und der Abluft-Abströmöffnung 10 angeordnet. Das Filtermittel 12 weist einen Fettfilter und einen Geruchsfilter, insbesondere einen Aktivkohlefilter, auf.

Der Abzugslüfter 7 ist als Radiallüfter ausgebildet. Insbesondere ist der Abzugslüfter 7 zum Fördern der gekühlten, gereinigten und von Feuchtigkeit befreiten Luft in die Umgebung 24 ist mit einer Ausblasöffnung 13 des Gargeräts 1 fluidleitend verbunden.

Das Gargerät 1 weist einen Garkammerlüfter 14 auf. Der Garkammerlüfter 14 ist dazu ausgebildet, eine Fluidströmung in der Garkammer 4 zu bewirken, insbesondere zum Erzielen erzwungener Konvektion an dem Gargut 2. Der Garkammerlüfter 14 umfasst einen Lüftermotor 15 und ein Lüfterrad 16. Das Lüfterrad 16 ist an einer Rückwand 17 der Garkammer 4 angeordnet. Der Garkammerlüfter 14 wird auch als Umluftlüfter bezeichnet. Die Steuereinheit 3 steht zum Steuern des Garkammerlüfters 14 mit diesem in Signalverbindung.

Die Garkammer 4 weist eine Gargutöffnung 18 auf, durch welche das Gargut 2 reversibel in die Garkammer 4 einbringbar ist. Ferner umfasst die Garkammer 4 eine Kammer-Abströmöffnung 19, welche mit der Abluft-Zuströmöffnung 9 der Aufbereitungseinheit 8 fluidleitend verbunden ist und an einer Bodenwand 20 der Garkammer 4 angeordnet ist. Eine Belüftungsöffnung 21 der Garkammer 4 ist an der Rückwand 17 angeordnet. Die Gargutöffnung 18 ist mit einer Garkammertür 22 reversibel verschließbar.

Mit der Belüftungsöffnung 21 steht ein Garkammerventil 23 in fluidleitender Verbindung. Insbesondere ist die Garkammer 4 über die Belüftungsöffnung 21 und das Garkammerventil 23 fluidleitend mit der Umgebung 24, also dem das Gargerät 1 umgebenden Raum, verbunden.

Die Belüftungsöffnung 21 ist relativ zu dem Lüfterrad 16 derart angeordnet, dass die Einströmrichtung 25, welche das über die Belüftungsöffnung 21 in die Garkammer 4 einströmende Fluid aufweist, auf das Lüfterrad 16 weist. Insbesondere überlappt das Lüfterrad 16 die Belüftungsöffnung 21 entlang der Einströmrichtung 25 und/oder entlang einer Flächennormalen auf die Belüftungsöffnung 21 und/oder entlang einer Flächennormalen auf die Rückwand 17 und/oder in einer Vorderansicht.

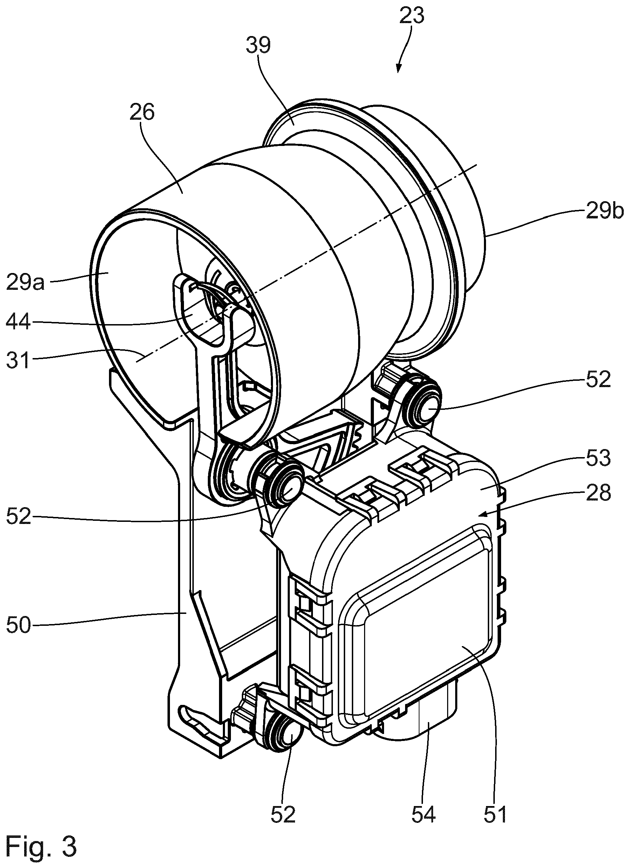

Anhand der Fig. 3 bis Fig. 6 wird das Garkammerventil 23 weiter im Detail beschrieben. Das Garkammerventil 23 weist eine Ventilkammer 26, einen Verschlusskörper 27 und einen Ventilmotor 28 auf. Die Ventilkammer 26 weist zwei Ventilöffnungen 29a, 29b auf. Die Ventilöffnung 29a ist entlang eines Strömungspfads auf Seiten der Umgebung 24 angeordnet und die Ventilöffnung 29b ist auf Seiten der Belüftungsöffnung 21 angeordnet. Zwischen den Ventilöffnungen 29a, 29b weist die Ventilkammer 26 einen Halsabschnitt 30 auf. In dem Halsabschnitt 30 ist der Strömungsquerschnitt verjüngt.

Die Ventilkammer 26 ist zu einer Mittellängsachse 31 im Wesentlichen rotationssymmetrisch ausgebildet. In einem Längsschnitt durch die Mittellängsachse 31 ist die Ventilkammer 26 sanduhrförmig ausgebildet. Ein Strömungskanal, der von der Ventilkammer 26 in radialer Richtung zu der Mittellängsachse 31 nach außen begrenzt ist, weist entlang des Strömungspfads unterschiedliche Außendurchmesser Dₐ, D_{b}, D_{N} auf. Der Außendurchmesser Dₐ des Strömungskanals beträgt an der auf Seiten der Umgebung 24 angeordneten Ventilöffnung 29a 62 mm. An der Ventilöffnung 29b, welche seitens der Belüftungsöffnung 21 angeordnet ist, beträgt der Außendurchmesser D_{b} des Strömungskanals 50 mm. Der geringste Außendurchmesser D_{N} des Strömungskanals liegt an dem Halsabschnitt 30 vor und beträgt 46 mm.

Der Verschlusskörper 27 ist relativ zu der Ventilkammer 26 linear verschiebbar gelagert. Der Verschlusskörper 27 weist einen Ventilkopf 32 auf, welcher kegelförmig ausgebildet ist. Der Ventilkopf 32, insbesondere der Verschlusskörper 27, ist konzentrisch zu der Ventilkammer 26, insbesondere zu der Mittellängsachse 31, angeordnet.

In den Fig. 3 bis Fig. 6 ist das Garkammerventil 23 in einer Verschlussstellung dargestellt, in welcher der Verschlusskörper 27 derart angeordnet ist, dass ein Durchströmen der Ventilöffnungen 29a, 29b über die Ventilkammer 26 verhindert ist. In der Verschlussstellung liegt der Ventilkopf 32 dichtend an der Ventilkammer 26 an. Die Kontaktfläche zwischen dem Ventilkopf 32 und der Ventilkammer 26 wird als Dichtfläche 33 bezeichnet.

Der Verschlusskörper 27 ist aus der Verschlussstellung in mindestens eine Offenstellung entlang einer Öffnungsrichtung 34 linear verlagerbar. Die Öffnungsrichtung 34 ist parallel zu der Mittellängsachse 31 orientiert. Ein Öffnungswinkel α zwischen der Öffnungsrichtung 34 und der Dichtfläche 33 beträgt, insbesondere in einer Schnittebene entlang der Mittellängsachse 31, 30°.

Das Garkammerventil 23 umfasst eine Linearführung 35 zum verschiebbaren Lagern des Verschlusskörpers 27 relativ zu der Ventilkammer 26. Die Linearführung 35 weist eine Führungshülse 36 und einen Führungsschaft 37 auf, welche konzentrisch zu der Mittellängsachse 31 ausgebildet sind. Der Führungsschaft 37 ist einstückig, insbesondere stoffschlüssig, mit dem Ventilkopf 32 verbunden. Die Führungshülse 36 ist einstückig, insbesondere stoffschlüssig, mit der Ventilkammer 26 verbunden.

Die Ventilkammer 26 und/oder der Verschlusskörper 27 sind in einem Spritzgussverfahren, insbesondere aus einem Kunststoffmaterial, insbesondere aus Polyphenylensulfid, hergestellt. Vorzugsweise sind die Ventilkammer 26 und die Führungshülse 36 und/oder der Verschlusskörper 27 und der Führungsschaft 37 in einem einzigen Prozessschritt des Spritzgussverfahrens, insbesondere aus dem gleichen Material, hergestellt.

Die Führungshülse 36 ist mit der Ventilkammer 26 über drei Rippen 38 verbunden. Die Rippen 38 sind als Strömungsleitelemente ausgebildet.

Zum Befestigen des Garkammerventils 23, insbesondere der Ventilkammer 26, an der Garkammer 4 weist das Garkammerventil 23 einen einstückig, insbesondere stoffschlüssig, mit der Ventilkammer 26 verbundenen Flansch 39 auf. Der Flansch 39 ist konzentrisch zu der Mittellängsachse 31 ausgebildet.

Das Garkammerventil 23 weist eine Vorspannfeder 40 auf, welche auf den Verschlusskörper 27 wirkt. Die Vorspannfeder 40 ist derart angeordnet, dass diese eine Vorspannkraft F_{V} auf den Verschlusskörper 27 in Richtung der Verschlussstellung bewirkt. Am Führungsschaft 37 ist mittels eines Sprengrings 41 eine Scheibe 42 angebracht. Die Vorspannfeder 40 wirkt zwischen der Ventilkammer 26, insbesondere den Rippen 38, und dem Verschlusskörper 27, insbesondere der Scheibe 42.

Der Verschlusskörper 28 wirkt über eine Kopplung 43 auf den Verschlusskörper 27, insbesondere auf die Scheibe 42. Die Kopplung 43 umfasst eine motorseitige Öse 44, welche dazu ausgebildet ist, eine von dem Ventilmotor 28 bereitgestellte Stellkraft F_{S} auf den Verschlusskörper 27, insbesondere auf die Scheibe 42, zu übertragen. Die Stellkraft F_{S} ist in Öffnungsrichtung 34 orientiert. Insbesondere ist die Stellkraft F_{S} entgegen der Vorspannkraft F_{V} orientiert. Die Scheibe 42 ist ebenfalls ein Bestandteil der Kopplung 43 wie auch ein Zapfen 45, welcher einstückig, insbesondere stoffschlüssig, mit dem Führungsschaft 47 verbunden ist. Die Öse 44 umgibt den darin angeordneten Zapfen 45.

Die Kopplung 43 mit der Öse 44, dem Zapfen 45 und der Scheibe 42 ist derart ausgebildet, dass der Ventilmotor 28 die Stellkraft F_{S} auf den Verschlusskörper 27 in die Öffnungsrichtung 34 bewirken kann. Eine Verlagerungsbewegung des Verschlusskörpers 27 in die Öffnungsrichtung 34 bewirkt hingegen keine Kraft auf den Ventilmotor 28. Die Kopplung 43 ist derart ausgebildet, dass der Verschlusskörper 27 entlang einer Wirkrichtung des Ventilmotors 28 verlagerbar an diesen angebunden ist.

Der Ventilmotor 28 weist ein Ventilgetriebe 46 auf. Ein nicht dargestellter Elektromotor ist an das Ventilgetriebe 46 angeschlossen. Das Ventilgetriebe 46 wandelt eine Antriebskraft des Elektromotors in die Stellkraft F_{S}. Das Ventilgetriebe 46 umfasst ein Ritzel 47 mit zwei Endanschlägen 48a, 48b. Das Ritzel 47 steht in Eingriff mit einem Zahnhebel 49, welcher mit der Öse 44, insbesondere einstückig, insbesondere stoffschlüssig, verbunden ist. Der Elektromotor wirkt über das Ritzel 47 und den Zahnhebel 49 auf die Öse 44.

Das Garkammerventil 23 weist eine Tragstruktur 50 auf. Das Ritzen 47 und der Zahnhebel 49 sind an der Tragstruktur 50 drehbar gelagert. Die Tragstruktur 50 ist einstückig, insbesondere stoffschlüssig, mit der Ventilkammer 26 ausgebildet. Die Tragstruktur 50 ist zumindest abschnittsweise als Gehäuse ausgebildet. Der Elektromotor ist in einem Motorgehäuse 51 angeordnet, welches mittels Verbindungselementen 52 an der Tragstruktur 50 angebracht ist. Ein Gehäusedeckel 53 ist werkzeuglos, insbesondere reversibel lösbar, an dem Motorgehäuse 51 angebracht.

Eine Steuerschnittstelle 54 des Ventilmotors 28 ist zum Schutz vor Flüssigkeiten an einer Unterseite des Motorgehäuses 51 angeordnet.

Die Funktionsweise des Gargeräts 1 und des Garkammerventils 23 ist wie folgt:
Das Gargerät 1 ist zunächst deaktiviert. Insbesondere sind die Heizeinheit, die Fluidableiteinheit 6 und der Dampferzeuger 6a deaktiviert. Das Garkammerventil 23 befindet sich in der Verschlussstellung.

Die Garkammer 4 wird durch die Gargutöffnung 18 mit dem Gargut 2 beladen. Die Gargutöffnung 18 wird mittels der Garkammertür 22 verschlossen.

Über die Benutzerschnittstelle 5 wird ein Befehl zum Aktivieren des Gargeräts 1 vom Benutzer an der Steuereinheit 3 bereitgestellt. Die Heizeinheit wird zum Erhitzen der Luft innerhalb der Garkammer 4 aktiviert. Aufgrund eines Steuersignals der Steuereinheit 3 wird mittels des Dampferzeugers 6a flüssiges Wasser in die Garkammer 4, insbesondere in Richtung des Lüfterrads 6, eingesprüht. Das eingesprühte Wasser verdampft in der Garkammer 4.

Der Garkammerlüfter 14 wird aktiviert. Hierdurch wird die Feuchtigkeit, insbesondere der Dampf, gleichmäßig in der Garkammer 4 verteilt und eine homogene Temperaturverteilung innerhalb der Garkammer 4 wird bewirkt.

Mittels der Steuereinheit 3 werden die Temperatur und Feuchtigkeit in der Garkammer 4 gesteuert, insbesondere geregelt. Die Steuereinheit 3 stellt die Temperatur und die Feuchtigkeit anhand eines vorgegebenen Temperatur-Sollwerts und eines vorgegebenen Feuchtigkeit-Sollwerts ein. Der Temperatur-Sollwert und/oder der Feuchtigkeits-Sollwert können von dem Benutzer oder beispielsweise von einem Garprogramm vorgegeben sein. Der Temperatur-Sollwert und der Feuchtigkeits-Sollwert können in unterschiedlichen, zeitlich nacheinander folgenden Garphasen unterschiedlich sein. Beispielsweise kann der Feuchtigkeits-Sollwert zum Erzielen einer trockenen Gargutoberfläche nach einer anfänglichen Garphase mit hoher Feuchtigkeit in einer abschließenden Garphase reduziert werden. Der Feuchtigkeits-Sollwert in der Garkammer 4 kann auch vor dem Öffnen der Garkammertür 22, insbesondere vor dem Lösen einer Türverriegelung, reduziert werden, um den Austritt von heißem Dampf aus der Garkammer 4 in Richtung des Benutzers möglichst zu vermeiden.

Zum Reduzieren der Feuchtigkeit in der Garkammer 4 wird der Abzugslüfter 7 mittels der Steuereinheit 3 aktiviert. Luft, insbesondere feuchte Luft, wird durch die Kammer-Abströmöffnung 19 und die Aufbereitungseinheit 8 aus der Garkammer 4 abgesaugt. In der Aufbereitungseinheit 8 wird die Luft, insbesondere unter Verwendung eines Wärmetauschers und/oder von Kühlwasser, abgekühlt. Hierbei kondensiert die in der Luft enthaltene Feuchtigkeit. Die Feuchtigkeit wird über die Drainage-Öffnung 11 abgeleitet und an einen Abwasseranschluss abgegeben. Die gekühlte und getrocknete Luft wird in dem Filtermittel 12 von Fetten und Gerüchen befreit. Über den Abzugslüfter 7 gelangt die Luft zur Ausblasöffnung 13 und strömt in die Umgebung 24 ab.

Mittels des Garkammerventils 23 wird das Einströmen trockener Umgebungsluft in die Garkammer 4 ermöglicht. Die Steuereinheit 3 stellt ein Steuersignal zum Verlagern des Verschlusskörpers 27 aus der Verschlussstellung in die mindestens eine Offenstellung bereit. Der Ventilmotor 28 wird aktiviert. Eine von einem Elektromotor bereitgestellte Antriebskraft wird mittels des Ventilgetriebes in die Stellkraft F_{S} gewandelt. Der Verschlusskörper 27 wird entgegen der Vorspannkraft F_{V} in die Öffnungsrichtung 34 verlagert.

In der Offenstellung steht der Ventilkopf 32 außer Kontakt mit der Ventilkammer 26. Die zwei Ventilöffnungen 29a, 29b sind über die Ventilkammer 26 durchströmbar.

Der statische Druck an der Belüftungsöffnung 21 ist geringer als der statische Druck in der Umgebung 24. Der Druckunterschied wird bewirkt durch den Abzugslüfter 7 einerseits und den Garkammerlüfter 14 andererseits. Die Belüftungsöffnung 21 ist hierzu insbesondere in einem Bereich der Garkammer 4 angeordnet, in welchem der Garkammerlüfter 14 im Betrieb Unterdruck erzeugt. Ein entsprechender Unterdruck wird beispielsweise erwirkt in dem von dem Lüfterrad 16 überlappten Bereich der Rückwand 17.

Aufgrund der Druckdifferenz zwischen der Belüftungsöffnung 21 und der Umgebung 24 strömt Umgebungsluft durch das Garkammerventil 23 über die Belüftungsöffnung 21 in die Garkammer 4 ein. Mittels des Garkammerlüfters 14 wird die einströmende Umgebungsluft effizient mit der in der Garkammer 4 befindlichen Luft vermischt.

In dem Strömungskanal zwischen der Belüftungsöffnung 21 und der Umgebung 24 ist ein Ventil-Filtermittel 55 angeordnet. Das Ventil-Filtermittel 55 ist reversibel von dem Gargerät 1 abnehmbar. Insbesondere ist das Ventil-Filtermittel 55 an der der Umgebung 24 zugewandten Ventilöffnung 29a angeordnet. Das Ventil-Filtermittel 55 weist einen HEPA-Filter auf.

Die Steuereinheit 3 ist dazu ausgebildet, den über das Garkammerventil 23 in die Garkammer 4 einströmenden Luftstrom zu steuern. Hierzu werden die Leistung des Abzugslüfters 7, die Leistung des Garkammerlüfters 14 und/oder die Stellposition des Garkammerventils 23, insbesondere die Position des Verschlusskörpers 27 relativ zu der Ventilkammer 26 mittels der Steuereinheit 3 eingestellt.

Die Lüfterleistung des Abzugslüfters 7 und des Garkammerlüfters 14 sind stufenlos einstellbar. Die Position des Verschlusskörpers 27 relativ zu der Ventilkammer 26 ist mittels des Ventilmotors 28 stufenlos einstellbar. Hierdurch ist ein Strömungsquerschnitt zwischen dem Verschlusskörper 27 und der Ventilkammer 26, und entsprechend ein Strömungswiderstand des Garkammerventils 23, stufenlos einstellbar. Die von der Lüfterleistung abhängige Druckdifferenz zwischen der Belüftungsöffnung 21 und der Umgebung 24 und der von der jeweiligen Öffnungsstellung des Verschlusskörpers 27 bestimmte Strömungswiderstand sind ausschlaggebend für den erzielten Luftstrom in die Garkammer 4.

Die Feuchtigkeit und die Temperatur in der Garkammer 4 werden reduziert. Gegebenenfalls in der Garkammer 4 kondensierendes Wasser wird über die Bodenwand 20 in die Aufbereitungseinheit 8 abgeleitet. Ist der Feuchtigkeits-Sollwert erreicht, stellt die Steuereinheit 3 ein Signal zum Deaktivieren des Abzugslüfters 7 an der Fluidableiteinheit 6 und ein Signal zum Verlagern des Verschlusskörpers 27 in die Verschlussstellung an dem Garkammerventil 23 bereit. Die Zufuhr von Umgebungsluft in die Garkammer 4 wird unterbrochen. Sofern erforderlich, wird die Temperatur in der Garkammer 4 mittels der Heizeinheit auf den Temperatur-Sollwert angehoben. Der Garvorgang kann mit der reduzierten Feuchtigkeit fortgesetzt werden. Alternativ kann die Türverriegelung zum Öffnen der Garkammertür 22 gelöst werden. Die reduzierte Temperatur bzw. Feuchtigkeit in der Garkammer 4 reduziert die Gefährdung des Benutzers durch heißen Dampf beim Öffnen der Garkammertür 22.

Eine weitere Funktion des Garkammerventils 23 besteht darin, eine unzulässige Druckdifferenz zwischen der Garkammer 4 und der Umgebung 24 zu verhindern. Beim Abkühlen der Garkammer 4, insbesondere durch das Einsprühen von Wasser mittels des Dampferzeugers 6a in die Garkammer 4, insbesondere aufgrund der beim Übergang des Wassers in den gasförmigen Zustand beanspruchten Verdunstungsenthalpie, kann die Temperatur der Luft in der Garkammer 4 rasch absinken. Das Absinken der Temperatur führt zum Absinken des Drucks in der Garkammer 4. Insbesondere drohen eine Öffnung eines Geruchsverschlusses der Drainage-Öffnung 11, ein Rückfluss von Abfluss-Flüssigkeit in die Aufbereitungseinheit 8, eine dauerhafte Verformung einer Wandung der Garkammer 4 oder eine Beschädigung der Garkammertür 22. Um dies zu vermeiden, ist das Garkammerventil 23 als Rückschlagventil ausgebildet.

Die Vorspannfeder 40 ist derart ausgelegt, dass der Verschlusskörper 27 beim Erreichen eines Druckdifferenz-Schwellenwerts zwischen der Garkammer 4 und der Umgebung 24, insbesondere zwischen den beiden Ventilöffnungen 29a, 29b, aufgrund dieser Druckdifferenz aus der Verschlussstellung in die mindestens eine Offenstellung verlagert wird. Um diese Öffnungsbewegung des Verschlusskörpers 27 zuverlässig zu gewährleisten, ist der Verschlusskörper 27 mittels der Kopplung 43 verlagerbar an dem Ventilmotor 28 angebracht, insbesondere in Öffnungsrichtung 34 ohne Rückwirkung auf den Ventilmotor 28 frei verlagerbar.

Beim Erreichen des Druckdifferenz-Schwellwerts gelangt der Verschlusskörper 27 in die mindestens eine Offenstellung. Umgebungsluft strömt über das Garkammerventil 23 in die Garkammer 4 ein und die Druckdifferenz wird reduziert. Das Gasgerät 1 ist somit besonders sicher und robust im Betrieb.

Durch die kegelförmige Ausbildung des Verschlusskörpers 27, insbesondere des Ventilkopfes 32, ist die auf den Verschlusskörper 27 wirkende, in Öffnungsrichtung 34 orientierte Kraft aufgrund einer Druckdifferenz zwischen der Garkammer 4 und der Umgebung 24 besonders groß. Die trichterförmige, insbesondere kegelförmige, Dichtfläche 33 gewährleistet zudem eine besonders widerstandsarme Durchströmung des Garkammerventils 23. Ferner gewährleistet der ringförmige Strömungsquerschnitt zwischen dem Verschlusskörper 27 und der Ventilkammer 26 in der mindestens einen Offenstellung eine effiziente Durchmischung der zugeführten Umgebungsluft mit der in der Garkammer 4 befindlichen Luft.

Das Garkammerventil 23 verbindet die Funktionen eines Rückschlagventils und eines motorisch angetriebenen Stellventils in einem einzigen Bauteil. Hierdurch werden der Montageaufwand und der Herstellungsaufwand des Gargeräts 1 reduziert. Die Garkammer 4 kann durch die Reduktion der erforderlichen Öffnungen besser isoliert und besonders energieeffizient betrieben werden.

Durch die Ausbildung des Gargeräts 1 mit dem motorisch antreibbaren Garkammerventil 23 können die Temperatur und die Feuchtigkeit in der Garkammer 4 schnell, effizient und automatisiert geregelt werden. Der Garvorgang ist somit besonders präzise kontrollierbar. Die Zubereitung des Garguts 2 kann somit präzise und zuverlässig erfolgen.

## Patentansprüche

1. Gargerät (1) zum Erhitzen von Gargut (2), wobei das Gargerät (1) ein Backofen und/oder ein Dampfgarofen ist, aufweisend
1.1. eine Garkammer (4) zum Aufnehmen des Garguts (2), mit
1.1.1. einer Gargutöffnung (18), durch die das Gargut (2) in die Garkammer (4) einbringbar ist, und
1.1.2. eine Belüftungsöffnung (21),
1.2. ein Garkammerventil (23), mit
1.2.1 einer Ventilkammer (26), und
1.2.2. einem Verschlusskörper (27), der relativ zu der Ventilkammer (26) zwischen mindestens einer Offenstellung, in welcher der Verschlusskörper (27) das Durchströmen der Ventilkammer (26) freigibt und in der das Garkammerventil (23) die Garkammer (4) mit der Umgebung (24) fluidleitend verbindet, und einer Verschlussstellung, in welcher der Verschlusskörper (27) ein Durchströmen der Ventilkammer (26) verhindert und in der die fluidleitende Verbindung getrennt ist, reversibel verlagerbar ist,
1.2.3. wobei der Verschlusskörper (27) beim Überschreiten eines vorgegebenen Schwellenwerts einer Druckdifferenz zwischen der Garkammer (4) und der Umgebung (24) aus der Verschlussstellung in die mindestens eine Offenstellung wechselt, und
1.3. mindestens einen mit dem Garkammerventil (23) fluidleitend verbundenen Lüfter (7, 14) zum Fördern von Umgebungsluft durch das Garkammerventil (23) und die Belüftungsöffnung (21) in die Garkammer (4), **gekennzeichnet durch**
1.4. einen Ventilmotor (28) zum Verlagern des Verschlusskörpers (27) zwischen der Verschlussstellung und der mindestens einen Offenstellung,
1.5. wobei der Ventilmotor (28) ein selbsthemmend ausgebildetes Ventilgetriebe (46) zum Verlagern des Verschlusskörpers (27) aufweist.

2. Gargerät (1) nach Anspruch 1, **dadurch gekennzeichnet, dass** zwischen dem Ventilmotor (28) und dem Verschlusskörper (27) des Garkammerventils (23) eine Kopplung (43) derart ausgebildet ist, dass der Verschlusskörper (27) entlang einer Wirkrichtung des Ventilmotors (28) verlagerbar an den Ventilmotor (28) angebunden ist.

3. Gargerät (1) nach Anspruch 1 oder 2, **dadurch gekennzeichnet, dass** ein Strömungsquerschnitt des Garkammerventils (23) stufenlos einstellbar ist.

4. Gargerät (1) nach einem der vorstehenden Ansprüche, **dadurch gekennzeichnet, dass** der mindestens eine Lüfter (14) ein Lüfterrad (16) aufweist, welches die Belüftungsöffnung (21) entlang einer Einströmrichtung (25) der Umgebungsluft in die Garkammer (4) überlappt.

5. Gargerät (1) nach einem der vorstehenden Ansprüche, **dadurch gekennzeichnet, dass** der mindestens eine Lüfter (7) zum Absaugen von Luft aus der Garkammer (4) ausgebildet ist.

6. Gargerät (1) nach einem der vorstehenden Ansprüche, **gekennzeichnet durch** eine mit dem mindestens einen Lüfter (7, 14) und/oder dem Ventilmotor (28) in Signalverbindung stehende Steuereinheit (3) zum Steuern eines Stroms der Umgebungsluft über das Garkammerventil (23) in die Garkammer (4).

7. Gargerät (1) nach einem der vorstehenden Ansprüche, **dadurch gekennzeichnet, dass** das Garkammerventil (23) dazu ausgebildet ist, dass der Verschlusskörper (27) aufgrund eines Drucks in der Garkammer (4), der geringer ist als der Druck in der Umgebung (24), aus der Verschlussstellung in die mindestens eine Offenstellung wechselt.

8. Gargerät (1) nach einem der vorstehenden Ansprüche, **dadurch gekennzeichnet, dass** ein Öffnungswinkel (α) zwischen einer Öffnungsrichtung (34) des Verschlusskörpers (27) des Garkammerventils (23) beim Verlagern aus der Verschlussstellung und einer Strömungsrichtung entlang einer Dichtfläche (33), in welcher der Verschlusskörper (27) in der Verschlussstellung die Ventilkammer (26) des Garkammerventils (23) kontaktiert, in einem Bereich von 20° bis 60° liegt.

9. Gargerät (1) nach einem der vorstehenden Ansprüche, **gekennzeichnet durch** eine Linearführung (35) zum Führen des Verschlusskörpers (27) des Garkammerventils (23) zwischen der Verschlussstellung und der mindestens einen Offenstellung.

10. Gargerät (1) nach Anspruch 9, **dadurch gekennzeichnet, dass** ein Führungselement (36) der Linearführung (35) zum linear verschiebbaren Lagern eines Gegen-Führungselements (37) der Linearführung (35) einstückig mit der Ventilkammer (26) des Garkammerventils (23) ausgebildet ist.

11. Verfahren zum Betreiben eines Gargeräts (1) nach einem der Ansprüche 1 bis 10, aufweisend die Schritte:
11.1. Bereitstellen des Gargeräts (1),
11.2. Verlagern des Verschlusskörpers (27) des Garkammerventils (23) aus der Verschlussstellung in die mindestens eine Offenstellung, und
11.3. Fördern von Umgebungsluft mittels des Lüfters (7, 14) durch das Garkammerventil (23) und die Belüftungsöffnung (21) in die Garkammer (4).

12. Verfahren nach Anspruch 11, **gekennzeichnet durch** stufenloses Einstellen des Verschlusskörpers (27) des Garkammerventils (23) zwischen einer Verschlussstellung und mindestens einer Offenstellung zum Steuern eines Stroms der Umgebungsluft über das Garkammerventil (23) in die Garkammer (4).

13. Verfahren nach Anspruch 11 oder 12, **gekennzeichnet durch** Reduzieren der Luftfeuchtigkeit in der Garkammer (4) **durch** das Fördern der Umgebungsluft in die Garkammer (4).

## Claims

1. Cooking appliance (1) for heating food to be cooked (2), wherein the cooking appliance (1) is an oven and/or a steam oven, comprising
1.1. a cooking chamber (4) for receiving the food to be cooked (2), having
1.1.1. an opening (18) for food to be cooked through which the food to be cooked (2) can be introduced into the cooking chamber (4), and
1.1.2. a ventilation opening (21),
1.2. a cooking chamber valve (23), having
1.2.1 a valve chamber (26), and
1.2.2. a closure body (27), which is reversibly displaceable relative to the valve chamber (26) between at least one open position, in which the closure body (27) allows the flow through the valve chamber (26) and in which the cooking chamber valve (23) connects the cooking chamber (4) to the environment (24) in a fluid-conducting manner, and a closed position, in which the closure body (27) prevents the flow through the valve chamber (26) and in which the fluid-conducting connection is disconnected,
1.2.3. wherein the closure body (27) changes from the closed position to the at least one open position when a predetermined threshold value of a pressure difference between the cooking chamber (4) and the environment (24) is exceeded, and
1.3. at least one fan (7, 14) that is connected in a fluid-conducting manner to the cooking chamber valve (23) so as to convey ambient air through the cooking chamber valve (23) and the ventilation opening (21) into the cooking chamber (4),
**characterized by**
1.4. a valve motor (28) for displacing the closure body (27) between the closed position and the at least one open position,
1.5. wherein the valve motor (28) comprises a self-locking valve gear (46) for displacing the closure body (27).

2. Cooking appliance (1) according to Claim 1, **characterised in that** a coupling (43) is formed between the valve motor (28) and the closure body (27) of the cooking chamber valve (23) in such a manner that the closure body (27) is connected to the valve motor (28) so as to be displaceable along an effective direction of the valve motor (28).

3. Cooking appliance (1) according to Claim 1 or 2, **characterised in that** a flow cross-section of the cooking chamber valve (23) is continuously adjustable.

4. Cooking appliance (1) according to one of the preceding claims, **characterised in that** the at least one fan (14) comprises a fan wheel (16), which overlaps the ventilation opening (21) along an inflow direction (25) of the ambient air into the cooking chamber (4).

5. Cooking appliance (1) according to one of the preceding claims, **characterised in that** the at least one fan (7) is designed to extract air from the cooking chamber (4).

6. Cooking appliance (1) according to one of the preceding claims, **characterised by** a control unit (3), which is in signal communication with the at least one fan (7, 14) and/or the valve motor (28), for controlling a flow of the ambient air via the cooking chamber valve (23) into the cooking chamber (4).

7. Cooking appliance (1) according to one of the preceding claims, **characterised in that** the cooking chamber valve (23) is designed so that the closure body (27) changes from the closed position into the at least one open position due to a pressure in the cooking chamber (4), which is lower than the pressure in the environment (24).

8. Cooking appliance (1) according to one of the preceding claims, **characterised in that** an opening angle (α) between an opening direction (34) of the closure body (27) of the cooking chamber valve (23) during displacement from the closed position and a flow direction along a sealing surface (33), in which the closure body (27) contacts the valve chamber (26) of the cooking chamber valve (23) in the closed position, lies in a range of 20° to 60°.

9. Cooking appliance (1) according to one of the preceding claims, **characterised by** a linear guide (35) for guiding the closure body (27) of the cooking chamber valve (23) between the closed position and the at least one open position.

10. Cooking appliance (1) according to Claim 9, **characterised in that** a guide element (36) of the linear guide (35) is formed as a single piece with the valve chamber (26) of the cooking chamber valve (23) for the linearly displaceable bearing of a mating guide element (37) of the linear guide (35).

11. Method for operating a cooking appliance (1) according to one of claims 1 to 10, comprising the steps:
11.1. providing the cooking appliance (1),
11.2. displacing the closure body (27) of the cooking chamber valve (23) from the closed position into the at least one open position, and
11.3. conveying ambient air by means of the fan (7, 14) through the cooking chamber valve (23) and the ventilation opening (21) into the cooking chamber (4).

12. Method according to Claim 11, **characterised by** continuously adjusting the closure body (27) of the cooking chamber valve (23) between a closed position and at least one open position so as to control a flow of the ambient air via the cooking chamber valve (23) into the cooking chamber (4).

13. Method according to Claim 11 or 12, **characterised by** reducing the air humidity in the cooking chamber (4) by conveying the ambient air into the cooking chamber (4).

## Revendications

1. Appareil de cuisson (1) destiné à chauffer des produits à cuire (2), l'appareil de cuisson (1) étant un four et/ou un four à vapeur, présentant
1.1. une chambre de cuisson (4) destinée à recevoir les produits à cuire (2), comportant
1.1.1. une ouverture de produits à cuire (18) à travers laquelle les produits à cuire (2) peuvent être introduits dans la chambre de cuisson (4), et
1.1.2. une ouverture de ventilation (21),
1.2. une soupape de chambre de cuisson (23), comportantt
1.2.1 une chambre de soupape (26), et
1.2.2. un corps de fermeture (27) qui, par rapport à la chambre de soupape (26), peut être déplacé de manière réversible entre au moins une position d'ouverture, dans laquelle le corps de fermeture (27) libère le passage à travers la chambre de soupape (26) et dans laquelle la soupape de chambre de cuisson (23) relie la chambre de cuisson (4) à l'environnement (24) d'une manière conductrice de fluide, et une position de fermeture dans laquelle le corps de fermeture (27) empêche le passage à travers la chambre de soupape (26) et dans laquelle la liaison conductrice de fluide est coupée,
1.2.3. dans lequel le corps de fermeture (27) passe de la position de fermeture à ladite au moins une position d'ouverture lorsqu'une différence de pression entre la chambre de cuisson (4) et l'environnement (24) dépasse une valeur seuil prédéfinie, et
1.3. au moins un ventilateur (7, 14) relié d'une manière conductrice de fluide à la soupape de chambre de cuisson (23) pour refouler de l'air ambiant à travers la soupape de chambre de cuisson (23) et l'ouverture de ventilation (21) dans la chambre de cuisson (4),
**caractérisé par**
1.4. un moteur de soupape (28) pour déplacer le corps de fermeture (27) entre la position de fermeture et ladite au moins une position d'ouverture,
1.5. dans lequel le moteur de soupape (28) présene un mécanisme de transmission de soupape (46) à blocage automatique pour déplacer le corps de fermeture (27).

2. Appareil de cuisson (1) selon la revendication 1, **caractérisé en ce qu**'un accouplement (43) est formé entre le moteur de soupape (28) et le corps de fermeture (27) de la soupape de chambre de cuisson (23) de telle sorte que le corps de fermeture (27) est relié au moteur de soupape (28) de manière à pouvoir se déplacer le long d'une direction d'action du moteur de soupape (28).

3. Appareil de cuisson (1) selon la revendication 1 ou 2, **caractérisé en ce qu**'une section transversale d'écoulement de la soupape de chambre de cuisson (23) est réglable en continu.

4. Appareil de cuisson (1) selon l'une des revendications précédentes, **caractérisé en ce que** ledit au moins un ventilateur (14) présente une roue de ventilateur (16) qui recouvre l'ouverture de ventilation (21) le long d'une direction d'entrée (25) de l'air ambiant dans la chambre de cuisson (4).

5. Appareil de cuisson (1) selon l'une des revendications précédentes, **caractérisé en ce que** ledit au moins un ventilateur (7) est conçu pour aspirer de l'air hors de la chambre de cuisson (4).

6. Appareil de cuisson (1) selon l'une des revendications précédentes, **caractérisé par** une unité de commande (3) en liaison de signalisation avec ledit au moins un ventilateur (7, 14) et/ou le moteur de soupape (28) pour commander un flux d'air ambiant dans la chambre de cuisson (4) à travers la soupape de chambre de cuisson (23).

7. Appareil de cuisson (1) selon l'une des revendications précédentes, **caractérisé en ce que** la soupape de chambre de cuisson (23) est conçue de telle sorte que le corps de fermeture (27) passe de la position de fermeture à ladite au moins une position d'ouverture en raison d'une pression dans la chambre de cuisson (4) qui est inférieure à la pression dans l'environnement (24).

8. Appareil de cuisson (1) selon l'une des revendications précédentes, **caractérisé en ce qu**'un angle d'ouverture (α) entre une direction d'ouverture (34) du corps de fermeture (27) de la soupape de chambre de cuisson (23) lors du déplacement à partir de la position de fermeture et une direction d'écoulement le long d'une surface d'étanchéité (33) dans laquelle le corps de fermeture (27) est en contact avec la chambre de soupape (26) de la soupape de chambre de cuisson (23) dans la position de fermeture, se situe dans une plage de 20° à 60°.

9. Appareil de cuisson (1) selon l'une des revendications précédentes, **caractérisé par** un guidage linéaire (35) pour guider le corps de fermeture (27) de la soupape de chambre de cuisson (23) entre la position de fermeture et ladite au moins une position d'ouverture.

10. Appareil de cuisson (1) selon la revendication 9, **caractérisé en ce qu**'un élément de guidage (36) du guidage linéaire (35) destiné à permettre le déplacement linéaire d'un élément de guidage opposé (37) du guidage linéaire (35) est formé d'une seule pièce avec la chambre de soupape (26) de la soupape de chambre de cuisson (23).

11. Procédé pour faire fonctionner un appareil de cuisson (1) selon l'une des revendications 1 à 10, présentant les étapes suivantes :
11.1. mise à disposition de l'appareil de cuisson (1),
11.2. déplacement du corps de fermeture (27) de la soupape de chambre de cuisson (23) de la position de fermeture à ladite au moins une position d'ouverture, et
11.3. refoulement d'air ambiant au moyen du ventilateur (7, 14) à travers la soupape de chambre de cuisson (23) et l'ouverture de ventilation (21) dans la chambre de cuisson (4).

12. Procédé selon la revendication 11, **caractérisé par** un réglage en continu du corps de fermeture (27) de la soupape de chambre de cuisson (23) entre une position de fermeture et au moins une position d'ouverture pour commander un flux d'air ambiant dans la chambre de cuisson (4) à travers la soupape de chambre de cuisson (23).

13. Procédé selon la revendication 11 ou 12, **caractérisé par** une réduction de l'humidité de l'air dans la chambre de cuisson (4) par le refoulement de l'air ambiant dans la chambre de cuisson (4).
